# FASCICULE DE BREVET EUROPEEN

(11) **EP 2 257 469 B1**
(45) Date de publication et mention de la délivrance du brevet: **24.10.2018**
(21) Numéro de dépôt: 09729507.5
(22) Date de dépôt: 23.03.2009
(51) Int. Cl.: B64C 13/18, B64D 45/00, G05D 1/00, G08B 21/00

(54) **PROCÉDÉ ET DISPOSITIF POUR LA DÉTECTION D'ABSENCES DE PILOTAGE MANUEL ET AUTOMATIQUE D'UN AÉRONEF**
VERFAHREN UND VORRICHTUNG ZUR ERKENNUNG DES AUSFALLS EINER MANUELLEN ODER AUTOMATISCHEN FLUGZEUGSTEUERUNG
METHOD AND DEVICE FOR DETECTING ABSENCES OF MANUAL AND AUTOMATIC PILOTING OF AN AIRCRAFT

(30) Priorité: 26.03.2008 FR 0801637
(43) Date de publication de la demande: 08.12.2010
(73) Titulaire: Airbus Opérations SAS, 31060 Toulouse (FR)
(72) Inventeur: DEHAIS, Frédéric, F-31100 Toulouse (FR)
(74) Mandataire: Gevers & Orès
(86) Numéro de dépôt international: PCT/FR2009/000307
(87) Numéro de publication internationale: WO 2009/125091

(56) Documents cités:
- FR-A- 2 880 456
- US-A- 3 411 132
- US-A- 5 243 339

## Description

La présente invention concerne un procédé et un dispositif pour la détection d'absences de pilotage manuel et de pilotage automatique d'un aéronef, ainsi qu'un aéronef pourvu d'un tel dispositif.

On sait que la plupart des aéronefs, notamment les avions de transport civil, sont équipés d'un pilote automatique qui permet de contrôler la trajectoire suivant des consignes préétablies par l'équipage. Un tel pilote automatique présente l'avantage majeur d'alléger la charge de travail de l'équipage en le soulageant d'une partie de la tâche de navigation, lors de la plupart des phases du vol. On sait de plus que la connexion et la déconnexion du pilote automatique s'effectuent par une action volontaire de l'équipage.

Toutefois, dans certaines circonstances particulières (panne, turbulences, etc.), le pilote automatique est amené à se déconnecter de lui-même.

Quelle que soit la cause de la déconnexion du pilote automatique, l'équipage en est informé par une ou plusieurs alarmes auditives, ainsi que par des modifications visuelles sur les interfaces de pilotage.

Or, en dépit de ces systèmes d'alerte visuels et auditifs, il est rapporté de nombreux cas où les équipages ne prennent pas conscience de la déconnexion du pilote automatique :
- soit les équipages doivent faire face à des situations de charge de travail importantes ou particulièrement stressantes qui peuvent dégrader leur capacité attentionnelle et les amener à négliger des alarmes, telles que celles de déconnexion du pilote automatique ;
- soit il se produit une incompréhension au sein de l'équipage dans la répartition des tâches de pilotage ;
- soit l'alarme de déconnexion du pilote automatique est masquée par une alarme simultanée de plus grande priorité (par exemple une alarme de sortie du domaine de vol de l'aéronef).

Par ailleurs, l'existence de fois de commandes de vol, qui stabilisent la trajectoire de l'aéronef peut contribuer à donner l'illusion que le pilote automatique est toujours en fonction et ne pas conduire l'équipage à vérifier l'état du pilote automatique.

Bien entendu, il est particulièrement dangereux pour l'aéronef de n'être piloté ni par l'équipage, ni par le pilote automatique.

Aussi, la présente invention a pour objet de détecter spécifiquement une telle situation et d'en avertir l'équipage.

A cette fin, selon l'invention, le procédé pour la détection d'absences de pilotage manuel et de pilotage automatique dans un aéronef pourvu d'au moins un manche de commande manuelle en roulis et en tangage et d'un pilote automatique dans lequel est programmée une trajectoire automatique, est caractérisée en ce que :
- en fonction de l'altitude, de la vitesse verticale et du cap dudit aéronef, ainsi que de l'écart de la trajectoire réelle de l'aéronef par rapport à ladite trajectoire automatique, on détermine un intervalle de temps pendant lequel il peut être toléré que ledit aéronef puisse voler sans ordre de commande, aussi bien de la part dudit manche que de celle dudit pilote automatique, l'écart étant calculé à partir de l'altitude, de la vitesse verticale, du cap et d'informations concernant la trajectoire automatique, l'intervalle de temps étant calculé en fonction de l'altitude, de la vitesse verticale, du cap et de l'écart ;
- on détecte l'absence de pilotage manuel par ledit manche ;
- on détecte l'absence de pilotage automatique par ledit pilote automatique ; et
- on émet une alerte à l'attention de l'équipage dudit aéronef dans le cas où l'on constate que lesdites absences de pilotage manuel et de pilotage automatique s'étendent simultanément sur une durée au moins égale audit intervalle de temps.

On remarquera que le document US-A-5 243 339 divulgue un procédé qui correspond au préambule de la définition ci-dessus du procédé conforme à la présente invention. Dans ce document antérieur, en fonction de l'altitude, de la vitesse, de l'écart de trajectoire de l'aéronef par rapport à la trajectoire automatique. ainsi que de l'activité de l'équipage (non détectée en tenant compte du pilotage manuel par le manche), on émet une alerte à l'attention de l'équipage après un intervalle de temps prédéterminé et non-variable. De plus, l'absence de pilotage automatique est détectée.

De même, le document US-A-3 411 132 divulgue un procédé correspondant audit préambule. Dans ce document, seule une alerte en fonction de la vitesse est émise.

Dans le document FR-A-2 880 456, une alerte sonore en deux étapes est émise lors de la désactivation du pilote automatique.

Pour la mise en oeuvre du procédé conforme à la présente invention, un dispositif monté à bord dudit aéronef peut comporter :
- des moyens de calcul, recevant des informations concernant au moins l'altitude, la vitesse verticale et le cap dudit aéronef, ainsi que des informations concernant ladite trajectoire automatique, lesdits moyens de calcul calculant l'intervalle de temps pendant lequel il peut être toléré que ledit aéronef puisse voler sans aucun ordre de commande, aussi bien de la part dudit manche que de celle dudit pilote automatique, l'écart étant calculé à partir de l'altitude, de la vitesse verticale, du cap et d'informations concernant la trajectoire automatique, l'intervalle de temps étant calculé en fonction de l'altitude, de la vitesse verticale, du cap et de l'écart ;
- des premiers moyens pour détecter l'absence de pilotage manuel par ledit manche ;
- des seconds moyens pour détecter l'absence de pilotage automatique par ledit pilote automatique ; et
- des moyens pour émettre une alerte à l'attention de l'équipage dans le cas où lesdits premiers et seconds moyens de détection détectent simultanément l'absence de pilotage manuel et l'absence de pilotage automatique pendant une durée au moins égale audit intervalle de temps calculé par lesdits moyens de calcul.

La présence et l'absence de pilotage manuel peuvent être détectées respectivement par la présence et par l'absence d'une main de pilote sur ledit manche. Dans ce cas, on peut utiliser des contacteurs ou des capteurs de pression montés sur lesdits manches de pilotage.

En variante, ou en complément, on peut détecter la présence et l'absence de pilotage manuel respectivement par la présence et l'absence d'ordres de commande en roulis et en tangage émanant dudit manche. Dans ce cas, on prévoit des moyens aptes à détecter lesdits ordres de commande.

Lorsque l'on détecte la présence et l'absence de pilotage manuel, à la fois par la présence et l'absence d'une main de pilote sur le manche et par des moyens détectant les ordres de commande en roulis et tangage, il est avantageux d'émettre ladite alerte lorsque, bien que détectant la présence d'une main de pilote sur ledit manche, on constate, simultanément, l'absence desdits ordres de commande en roulis et tangage émanant dudit manche et l'existence d'un écart entre la trajectoire de l'aéronef et ladite trajectoire programmée dans ledit pilote automatique.

Lesdits moyens destinés à émettre ladite alerte à l'attention de l'équipage peuvent comporter un dispositif d'alerte et un dispositif de commande dudit dispositif d'alerte et ledit dispositif de commande peut être un compteur qui reçoit, pour le compter, ledit intervalle de temps calculé par lesdits moyens de calcul et qui est initialisé par des moyens logiques recevant, directement ou indirectement, des signaux engendrés par lesdits premiers et seconds moyens de détection du pilotage manuel et du pilotage automatique.

Les figures du dessin annexé feront bien comprendre comment l'invention peut être réalisée. Sur ces figures, des références identiques désignent des éléments semblables.
La figure 1 illustre schématiquement, sous forme synoptique, un premier mode de réalisation de la présente invention.
La figure 2 est le schéma synoptique d'un second mode de réalisation de la présente invention.
Les figures 3 et 4 illustrent deux exemples de mise en oeuvre de la présente invention.

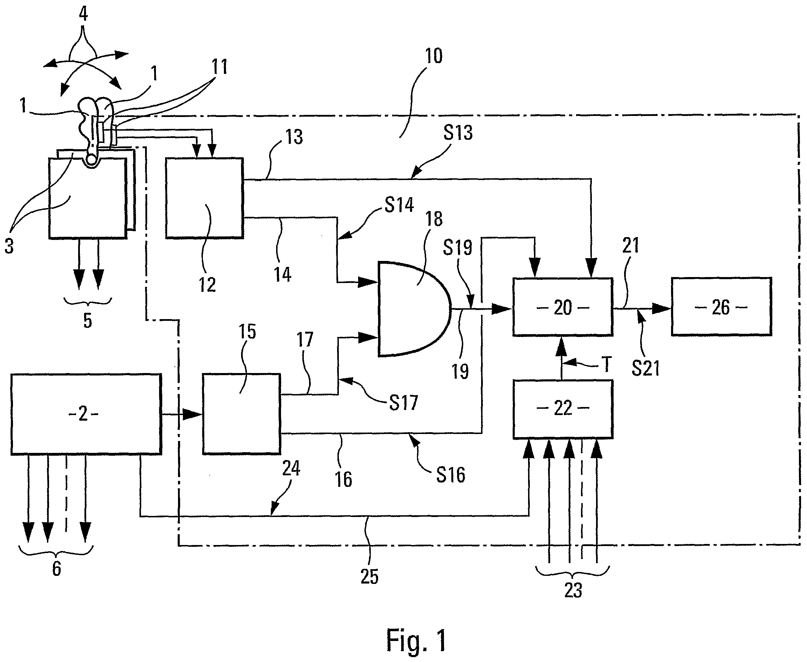

Sur la figure 1, on a représenté schématiquement les manches de pilotage 1 du pilote et du copilote d'un aéronef (non représenté), ainsi que le pilote automatique 2 de ce dernier. Les manches 1 sont reliés à des transducteurs 3 transformant les mouvements 4 desdits manches 1 en ordres de pilotage en roulis et en tangage 5 pour ledit aéronef. Le pilote automatique 2 est apte à engendrer des ordres de pilotage 6 pour ce dernier, à partir d'une trajectoire désirée par les pilotes et que ceux-ci ont programmée dans ledit pilote automatique 2 sous la forme de données de vitesse, d'altitude, de cap, etc.

De plus, la figure 1 montre le schéma synoptique d'un exemple de dispositif 10 mettant en oeuvre l'invention.

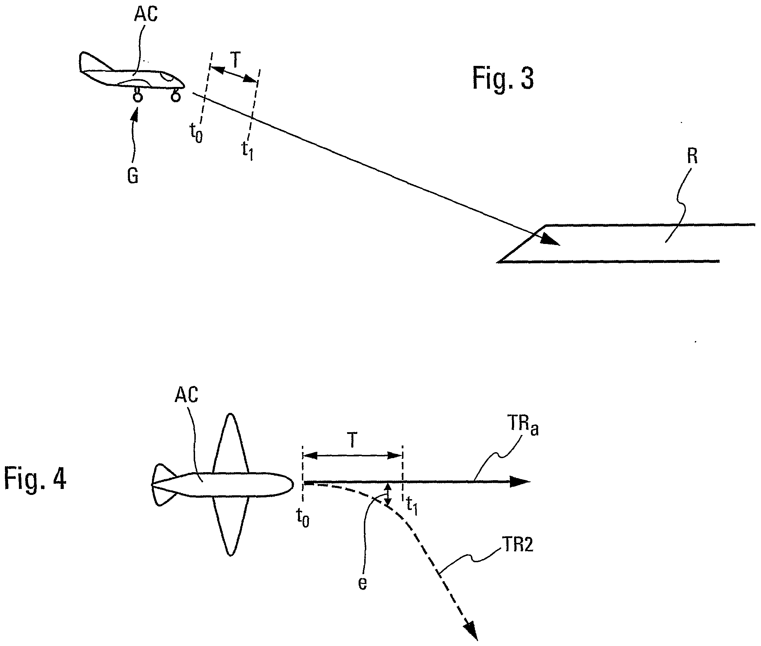

Ce dispositif 10 comporte :
- des capteurs 11, tels que des contacteurs ou des capteurs de pression, montés sur lesdits manches 1 et aptes à détecter en permanence la présence ou l'absence de la main des pilotes sur les manches respectifs ;
- un détecteur 12, relié aux manches 1 et apte à engendrer, à sa sortie 13, un signal S13 représentatif du fait qu'au moins l'un de ces capteurs 11 détecte la présence d'une main de pilote et, à sa sortie 14, un signal S14 représentatif du fait qu'aucun des contacteurs 11 ne détecte la présence d'une telle main ;
- un détecteur 15, relié au pilote automatique 2 et apte, d'une part, à détecter l'état actif (présence d'ordres 6) ou l'état inactif (absence d'ordres 6) de ce dernier et, d'autre part, à engendrer, à sa sortie 16, un signal S16 représentatif du fait que le pilote automatique 2 est actif et, à sa sortie 17, un signal S17 représentatif du fait que le pilote automatique 2 est inactif ;
- une porte logique 18, de type ET, recevant directement à ses entrées lesdits signaux S14 et S17 et apte à délivrer, à sa sortie 19, un signal S19 représentatif du fait qu'aucune main de pilote ne se trouve sur un manche 1 (c'est-à-dire que lesdits manches sont inactifs) et que le pilote automatique 2 est lui-même inactif ;
- un compteur 20, dont le début du comptage est commandé par ledit signal S19 et dont la remise à zéro est commandée par l'un quelconque des signaux S13 (provenant du détecteur 12) et S16 (provenant du détecteur 15), ledit compteur 20 étant apte à engendrer, à sa sortie 21, un signal S21 de fin de comptage ;
- un calculateur 22, recevant une pluralité d'informations 23 sur l'état actuel de l'aéronef, telles que altitude, vitesse, vitesse verticale, cap, etc. ainsi que des informations 24 concernant la trajectoire TR2 programmée par les pilotes dans le pilote automatique 2. A cette dernière fin, le pilote automatique 2 et le calculateur 22 sont reliés par une ligne 25. A partir des informations 23 et 24, le calculateur 22 peut donc calculer l'écart actuel e (voir la figure 4) de la trajectoire actuelle TRa par rapport à ladite trajectoire TR2, programmée dans le pilote automatique 2. En fonction des informations 23 et dudit écart actuel e, le calculateur 22 calcule un temps de comptage T qu'il adresse audit compteur 20 ; et
- un dispositif d'alerte 26, commandé par ledit signal S21 du compteur 20.

Ainsi, lorsque le signal S19 apparaît à la sortie 19 de la porte 18 (ce qui est représentatif du fait que les manches 1 et le pilote automatique 2 sont simultanément inactifs), le capteur 20 commence à compter le temps T, calculé par le calculateur 22. Il s'ensuit deux possibilités :
- si pendant le comptage du temps T par le compteur 20, au moins l'un desdits signaux S13 ou S16 apparaît (ce qui signifie respectivement que l'un des manches 1 est réactivé ou que le pilote automatique 2 est redevenu actif), le capteur 20 arrête le comptage du temps T et est remis à zéro ;
- en revanche, si pendant ledit comptage, aucun desdits signaux S13 ou S16 n'apparaît, le capteur 20 compte le temps T jusqu'à bout et, à la fin dudit comptage, il adresse le signal S21 au dispositif d'alerte 26, qui engendre une alerte appropriée à l'adresse des pilotes.

Ainsi, ladite alerte est émise lorsque :
- le pilote automatique est inactif (déconnecté) depuis l'intervalle de temps T ; et
- aucun des pilotes à bord n'agit manuellement sur son manche 1 depuis cet intervalle de temps T.

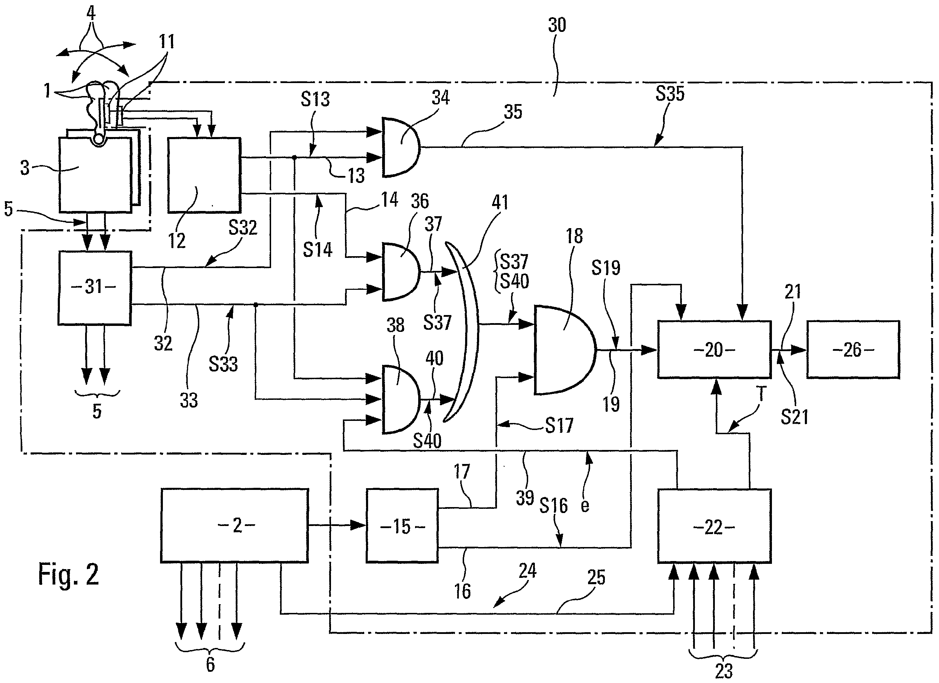

Dans la variante de réalisation 30 du dispositif conforme à la présente invention, représenté sur la figure 2, on retrouve les éléments 1 à 6 et 11 à 26 décrits en regard de la figure 1. Cependant, ce dispositif 30 comporte de plus :
- un détecteur 31, relié aux transducteurs 3 et aptes à détecter les ordres de roulis et de tangage 5 engendrés par les manches 1 et à engendrer, à sa sortie 32, un signal S32 représentatif du fait que le détecteur 31 détecte la présence d'ordres 5 et, à sa sortie 33, un signal S33 représentatif du fait qu'aucun ordre n'est détecté ;
- une porte logique 34, de type ET, recevant les signaux S13 et S32 et délivrant, à sa sortie 35, un signal S35 représentatif du fait qu'au moins l'un des manches 1 est tenu en main par un pilote et qu'il en résulte l'apparition d'un ordre 5. Le signal S35 est adressé au compteur 20, à la place du signal S13 comme indiqué sur la figure 1 ;
- une porte logique 36, de type ET, recevant les signaux S14 et S33 et délivrant, à sa sortie 37, un signal S37 représentatif du fait qu'aucun manche 1 n'est tenu en main par un pilote et qu'aucun ordre 5 n'est engendré par les transducteurs 3 ;
- une porte logique 38, de type ET, recevant les signaux S13 et S33, ainsi que, par l'intermédiaire d'une ligne 39, l'écart de trajectoire e calculé par le calculateur 22, et délivrant, à sa sortie 40, un signal S40 représentatif du fait que, bien qu'au moins un manche 1 soit tenu en main par un pilote, il n'existe aucun ordre 5 à la sortie des transducteurs 3 et il se produit un écart de trajectoire ; et
- une porte logique 41, de type OU, recevant lesdits signaux S37 et S40 et appliquant l'un ou l'autre de ces signaux à l'une des entrées de la porte 18 (à la place du signal S14 comme indiqué sur la figure 1) dont l'autre entrée reçoit (comme indiqué précédemment) le signal S17.

Ainsi, la porte 18 est reliée directement au détecteur 15, mais indirectement (par l'intermédiaire des portes 36, 38, 41) aux détecteurs 12 et 31 et le signal S19, apparaissant à la sortie 19 de ladite porte 18 et déclenchant le comptage du compteur 20 est représentatif :
- soit du fait que, simultanément, aucun manche 1 n'est tenu en main par un pilote et qu'aucun ordre 5 de roulis ou de tangage n'apparaît à la sortie du détecteur 31 ;
- soit du fait que, bien qu'au moins un des manches 1 soit tenu en main par un pilote, aucun ordre 5 de roulis ou de tangage n'apparaît à la sortie du détecteur 31, alors qu'il apparaît un écart de trajectoire e.

Ainsi, à moins que le comptage effectué par le compteur 20 soit arrêté du fait qu'au moins un pilote reprenne un manche 1 en main (signal S35) ou que le pilote automatique 2 redevienne actif, le dispositif 26 émet une alerte lorsque les conditions suivantes sont réunies :
- le pilote automatique 2 est déconnecté depuis l'intervalle de temps T, calculé par le calculateur 22 ;
- aucun des pilotes n'agit manuellement sur un manche 1 pendant cet intervalle de temps T :
   ▪ soit parce que les capteurs 11 détectent l'absence d'une main de pilote sur un manche 1 et le détecteur 31 détecte l'absence d'ordre 5 en tangage et en roulis ;
   ▪ soit parce que, bien que les capteurs 11 détectent la présence d'au moins une main de pilote sur un manche 1, le détecteur 31 ne détecte aucun ordre 5 en tangage et en roulis, alors que le calculateur 22 constate un écart e de la trajectoire actuelle TRa par rapport à la trajectoire TR2 programmée dans le pilote automatique 2.

Les figures 3 et 4 illustrent deux situations (parmi d'autres non représentées) dans lesquelles la présente invention contribue à améliorer la sécurité aérienne.

Sur la figure 3, on a représenté un aéronef AC, à bord duquel est monté l'un des dispositifs 10 ou 30 décrit ci-dessus. L'aéronef AC est en approche finale en vue d'atterrir sur une piste R. Son pilote automatique 2 est connecté et son train d'atterrissage G est sorti. A l'instant to, le pilote automatique 2 se déconnecte et l'équipage n'en prend pas conscience pour au moins une des raisons citées ci-dessus. Le dispositif 10 ou 30 détecte cette situation anormale et estime un intervalle de temps T à la fin duquel (instant t1) une alerte est émise par le dispositif 26 si l'équipage n'a toujours pas repris les commandes 1 ou reconnecté le pilote automatique 2. Dans ce cas précis, il va de soi que l'intervalle de temps T estimé par le calculateur 22 est court du fait que l'altitude de l'aéronef AC est faible et que sa vitesse verticale de descente est élevée.

Dans l'exemple de la figure 4, l'aéronef AC est en phase de croisière, le pilote automatique 2 est connecté dans le but de contrôler la trajectoire TR2. Pour au moins une des raisons citées ci-dessus, à l'instant to, le pilote automatique 2 se déconnecte et l'équipage n'en prend pas conscience. L'aéronef AC s'écarte progressivement de la trajectoire TR2 programmée dans le pilote automatique 2 pour poursuivre une trajectoire rectiligne TRa : le dispositif 10 ou 30 détecte cette situation anormale et estime un intervalle de temps T à la fin duquel (instant t1) une alerte est émise par le dispositif 26 si l'équipage n'a toujours pas repris les commandes 1 ou reconnecté le pilote automatique 2. Dans ce cas précis, l'intervalle de temps T estimé par le calculateur 22 est d'autant plus court que l'écart e à la trajectoire TR2 visée par le pilote automatique 2 est plus important.

## Revendications

1. Procédé pour la détection d'absences de pilotage manuel et de pilotage automatique dans un aéronef (AC) pourvu d'au moins un manche (1) de commande manuelle en roulis et en tangage et d'un pilote automatique (2) dans lequel est programmée une trajectoire automatique (TR2),
**caractérisé en ce que** :
- en fonction de l'altitude, de la vitesse verticale et du cap dudit aéronef (AC), ainsi que de l'écart (e) de la trajectoire réelle (TRa) de l'aéronef (AC) par rapport à ladite trajectoire automatique (TR2), on détermine un intervalle de temps (T) pendant lequel il peut être toléré que ledit aéronef (AC) puisse voler sans ordre de commande, aussi bien de la part dudit manche que de celle dudit pilote automatique, l'écart (e) étant calculé à partir de l'altitude, de la vitesse verticale, du cap et d'informations (24) concernant la trajectoire automatique (TR2), l'intervalle de temps (T) étant calculé en fonction de l'altitude, de la vitesse verticale, du cap et de l'écart (e) ;
- on détecte l'absence de pilotage manuel par ledit manche (1) ;
- on détecte l'absence de pilotage automatique par ledit pilote automatique (2) ; et
- on émet une alerte à l'attention de l'équipage dudit aéronef (AC) dans le cas où l'on constate que lesdites absences de pilotage manuel et de pilotage automatique s'étendent simultanément sur une durée au moins égale audit intervalle de temps (T).

2. Procédé selon la revendication 1,
**caractérisé en ce que** l'on détecte la présence et l'absence de pilotage manuel respectivement par la présence et l'absence d'une main de pilote sur ledit
manche.

3. Procédé selon la revendication 2,
**caractérisé en ce que** l'on détecte la présence et l'absence de pilotage manuel respectivement par la présence et l'absence d'ordres de commande en roulis et en tangage émanant dudit manche.

4. Procédé selon les revendications 2 et 3,
**caractérisé en ce qu'**on émet ladite alerte lorsque, bien que détectant la présence d'une main de pilote sur ledit manche, on constate, simultanément, l'absence desdits ordres de commande en roulis et tangage émanant dudit manche et l'existence d'un écart entre la trajectoire de l'aéronef et ladite trajectoire programmée dans ledit pilote automatique.

5. Dispositif pour la mise en oeuvre du procédé spécifié sous la revendication 1, à bord d'un aéronef pourvu d'au moins un manche (1) de commande manuelle en roulis et en tangage et d'un pilote automatique (2) dans lequel est programmée une trajectoire automatique,
**caractérisé en ce qu'**il comporte :
- des moyens de calcul (22), recevant des informations (23) concernant au moins l'altitude, la vitesse verticale et le cap dudit aéronef, ainsi que des informations (24) concernant ladite trajectoire automatique, lesdits moyens de calcul (22) calculant un intervalle de temps (T) pendant lequel il peut être toléré que ledit aéronef puisse voler sans aucun ordre de commande, aussi bien de la part dudit manche que de celle dudit pilote automatique, l'écart (e) étant calculé à partir de l'altitude, de la vitesse verticale, du cap et d'informations (24) concernant la trajectoire automatique (TR2), l'intervalle de temps (T) étant calculé en fonction de l'altitude, de la vitesse verticale, du cap et de l'écart (e) ;
- des premiers moyens (11, 12) pour détecter l'absence de pilotage manuel par ledit manche (1) ;
- des seconds moyens (15) pour détecter l'absence de pilotage automatique par ledit pilote automatique (2) ; et
- des moyens (20, 26) pour émettre une alerte à l'attention de l'équipage dans le cas où lesdits premiers (11, 12) et seconds (15) moyens de détection détectent simultanément l'absence de pilotage manuel et l'absence de pilotage automatique pendant une durée au moins égale audit intervalle de temps (T) calculé par lesdits moyens de calcul (22).

6. Dispositif selon la revendication 5,
**caractérisé en ce que** lesdits moyens (20, 26) destinés à émettre ladite alerte à l'attention de l'équipage comportent un dispositif d'alerte (26) et un dispositif de commande (20) dudit dispositif d'alerte (26) et **en ce que** ledit dispositif de commande (20) est un compteur qui reçoit, pour le compter, ledit intervalle de temps (T) calculé par lesdits moyens de calcul (22) et qui est initialisé par des moyens logiques (18) recevant, directement ou indirectement, des signaux engendrés par lesdits premiers (11, 12) et seconds (15) moyens de détection.

7. Dispositif selon la revendication 6, pour la mise en oeuvre du procédé selon la revendication 4,
**caractérisé en ce qu'**il comporte des moyens (31) aptes à détecter les ordres de pilotage automatique (5) engendrés par ledit pilote automatique (2) et reliés auxdits moyens logiques (18, 34, 36, 38, 41), ainsi qu'une liaison (39) apte à transférer ledit écart de trajectoire entre lesdits moyens de calcul (22) et lesdits moyens logiques.

8. Aéronef,
**caractérisé en ce qu'**il comporte un dispositif tel que spécifié sous l'une des revendications 5 à 7.

## Patentansprüche

1. Verfahren zur Erkennung von Ausfällen einer manuellen Steuerung und einer automatischen Steuerung in einem Luftfahrzeug (AC), das mit mindestens einem Steuerknüppel (1) zum manuellen Ansteuern von Rollen und Nicken und mit einem Autopiloten (2), in dem eine automatische Flugbahn (TR2) programmiert ist, versehen ist,
**dadurch gekennzeichnet, dass**:
- in Abhängigkeit von der Höhe, der vertikalen Geschwindigkeit und des Steuerkurses dieses Luftfahrzeugs (AC) sowie der Abweichung (e) der tatsächlichen Flugbahn (TRa) des Luftfahrzeugs (AC) im Verhältnis zu dieser automatischen Flugbahn (TR2) ein Zeitintervall (T) bestimmt wird, währenddessen geduldet werden kann, dass das Luftfahrzeug (AC) ohne Ansteuerbefehl, sowohl von Seiten des Steuerknüppels als auch von Seiten des Autopiloten fliegen kann, wobei die Abweichung (e) ausgehend von der Höhe, der vertikalen Geschwindigkeit, des Steuerkurses und von Informationen (24) bezüglich der automatischen Flugbahn (TR2) berechnet wird, wobei das Zeitintervall (T) in Abhängigkeit von der Höhe, der vertikalen Geschwindigkeit, des Steuerkurses und der Abweichung (e) berechnet wird;
- der Ausfall einer manuellen Steuerung durch diesen Steuerknüppel (1) erkannt wird;
- der Ausfall einer automatischen Steuerung durch diesen Autopiloten (2) erkannt wird; und
- eine an die Besatzung des Luftfahrzeugs (AC) gerichtete Warnmeldung in dem Fall abgesetzt wird, in dem festgestellt wird, dass die Ausfälle der manuellen Steuerung und der automatischen Steuerung sich gleichzeitig über eine Dauer erstrecken, die mindestens genauso lang ist wie das Zeitintervall (T).

2. Verfahren nach Anspruch 1,
**dadurch gekennzeichnet, dass** das Vorhandensein und der Ausfall einer manuellen Steuerung jeweils durch das Vorhandensein und den Ausfall einer Pilotenhand auf diesem Steuerknüppel erkannt wird.

3. Verfahren nach Anspruch 2,
**dadurch gekennzeichnet, dass** das Vorhandensein und der Ausfall einer manuellen Steuerung jeweils durch das Vorhandensein und den Ausfall von Ansteuerbefehlen von Rollen und Nicken, die vom Steuerknüppel ausgehen, erkannt wird.

4. Verfahren nach den Ansprüchen 2 und 3,
**dadurch gekennzeichnet, dass** eine Warnmeldung abgesetzt wird, wenn trotz Erkennen des Vorhandenseins einer Pilotenhand auf diesem Steuerknüppel gleichzeitig der Ausfall der Ansteuerbefehle von Rollen und Nicken, die vom Steuerknüppel ausgehen, und das Vorhandensein einer Abweichung zwischen der Flugbahn des Luftfahrzeugs und dieser im Autopiloten programmierten Flugbahn erkannt wird.

5. Vorrichtung zur Ausführung des Verfahrens nach Anspruch 1 an Bord eines Luftfahrzeugs, das mit mindestens einem Steuerknüppel (1) zum manuellen Ansteuern von Rollen und Nicken und mit einem Autopiloten (2), in dem eine automatische Flugbahn programmiert ist, versehen ist,
**dadurch gekennzeichnet, dass** sie aufweist:
- Berechnungsmittel (22), die Informationen (23) bezüglich mindestens der Höhe, der vertikalen Geschwindigkeit und des Steuerkurses dieses Luftfahrzeugs, sowie Informationen (24) bezüglich der automatischen Flugbahn empfangen, wobei die Berechnungsmittel (22) ein Zeitintervall (T) berechnen, währenddessen geduldet werden kann, dass dieses Luftfahrzeug ohne Ansteuerbefehl, sowohl von Seiten des Steuerknüppels als auch von Seiten des Autopiloten fliegen kann, wobei die Abweichung (e) ausgehend von der Höhe, der vertikalen Geschwindigkeit, des Steuerkurses und von Informationen (24) bezüglich der automatischen Flugbahn (TR2) berechnet wird, wobei das Zeitintervall (T) in Abhängigkeit von der Höhe, der vertikalen Geschwindigkeit, des Steuerkurses und der Abweichung (e) berechnet wird;
- erste Mittel (11, 12), um den Ausfall einer manuellen Steuerung durch diesen Steuerknüppel (1) zu erkennen;
- zweite Mittel (15), um den Ausfall einer automatischen Steuerung durch diesen Autopiloten (2) zu erkennen; und
- Mittel (20, 26), um eine an die Besatzung gerichtete Warnung in dem Fall abzusetzen, in dem die ersten (11, 12) und zweiten (15) Erkennungsmittel gleichzeitig den Ausfall einer manuellen Steuerung und den Ausfall einer automatischen Steuerung während einer Dauer, die mindestens genauso lang ist wie das von den Berechnungsmitteln (22) berechnete Zeitintervall (T), erkennen.

6. Vorrichtung nach Anspruch 5,
- **dadurch gekennzeichnet, dass** die Mittel (20, 26), die dazu vorgesehen sind, eine an die Besatzung gerichtete Warnmeldung abzusetzen, eine Warnvorrichtung (26) und eine Ansteuervorrichtung (20) der Warnvorrichtung (26) aufweisen, und dadurch, dass die Steuervorrichtung (20) ein Zähler ist, der das von den Berechnungsmitteln (22) berechnete Zeitintervall (T) empfängt, um es zu zählen, und der von logischen Mitteln (18) initialisiert wird, die direkt oder indirekt Signale empfangen, die von den ersten (11, 12) und zweiten (15) Erkennungsmitteln erzeugt werden.

7. Vorrichtung nach Anspruch 6, für die Ausführung des Verfahrens nach Anspruch 4,
**dadurch gekennzeichnet, dass** sie Mittel (31) aufweist, die geeignet sind, die von diesem Autopiloten (2) erzeugten und mit den logischen Mitteln (18, 34, 36, 38, 41) verbundenen Befehle der automatischen Steuerung (5) zu erkennen sowie eine Verbindung (39), die geeignet ist, die Abweichung der Flugbahn zwischen den Berechnungsmitteln (22) und den logischen Mitteln zu übermitteln.

8. Luftfahrzeug,
**dadurch gekennzeichnet, dass** es eine Vorrichtung nach einem der Ansprüche 5 bis 7 aufweist.

## Claims

1. A method for detecting absences of manual piloting and automatic piloting on an aircraft (AC) provided with at least one stick (1) for manually controlling roll and pitch and with an automatic pilot (2) in which an automatic trajectory (TR2) is programmed, wherein:
- depending on the altitude, the vertical speed and the heading of said aircraft (AC), as well as the deviation (e) of the actual trajectory (TRa) of the aircraft (AC) with respect to said automatic trajectory (TR2), a time interval (T) is determined, during which it is tolerable for said aircraft (AC) to be able to fly without any control command, both on the part of the stick and on that of said automatic pilot, the deviation (e) being calculated from the altitude, from the vertical speed, from the heading and from information (24) regarding the automatic trajectory (TR2), the time interval (T) being calculated from the altitude, from vertical speed, from the heading and from the deviation (e);
- the absence of manual piloting by said stick (1) is detected;
- the absence of automatic piloting by said automatic pilot (2) is detected; and
- an alert is emitted for the attention of the crew of said aircraft (AC) in the case where it is noted that said absences of manual piloting and automatic piloting last simultaneously over a period at least equal to said time interval (T).

2. The method according to claim 1,
wherein the presence and absence of manual piloting are detected respectively by the presence and absence of the pilot's hand on said stick.

3. The method according to claim 2,
wherein the presence and absence of manual piloting are detected respectively by the presence and absence of roll and pitch control commands coming from said stick.

4. The method according to claim 2,
wherein said alert is emitted when, even though the presence of the pilot hand on said stick is detected, the absence of said roll and pitch control commands from said stick and the existence of a deviation between the aircraft trajectory and said trajectory being programmed in said automatic pilot are noted simultaneously.

5. A device for implementing the method set out according to claim 1, on board an aircraft provided with at least one stick (1) for manually controlling roll and pitch and with an automatic pilot (2) in which an automatic trajectory is programmed,
wherein it comprises:
- calculating means (22) receiving information (23) regarding at least the altitude, the vertical speed and the heading of said aircraft, as well as information (24) regarding said automatic trajectory, said calculating means (22) calculating a time interval (T) during which it is tolerable for said aircraft to be able to fly without any control command, both on the part of the stick and on that of said automatic pilot, the deviation (e) being calculated from the altitude, from the vertical speed, from the heading and from information (24) regarding the automatic trajectory (TR2), the time interval (T) being calculated from the altitude, from vertical speed, from the heading and from the deviation (e);
- first means (11, 12) for detecting the absence of manual piloting by said stick (1);
- second means (15) for detecting the absence of automatic piloting by said automatic pilot (2); and
- means (20, 26) for emitting an alert for the attention of the crew in the case where said first (11, 12) and second (15) detection means simultaneously detect the absence of manual piloting and the absence of automatic piloting for a period at least equal to said time interval (T) calculated by said calculating means (22).

6. The device according to claim 5,
wherein said means (20, 26) for emitting said alert for the attention of the crew include un alerting device (26) and a controlling device (20) of said alerting device (26) and in that said controlling device (20) is a counter which receives, to count it, said time interval (T) calculated by said calculating means (22) and which is initialised by logic means (18) receiving, directly or indirectly, signals generated by said first (11, 12) and second (15) detection means.

7. The device according to claim 6 for implementing the method according to claim 4,
wherein it includes means (31) for detecting the commands of automatic piloting (5) generated by said automatic pilot (2) and connected to said logic means (18, 34, 36, 38, 41), as well as a link (39) for transferring said trajectory deviation between said calculating means (22) and said logic means.

8. An aircraft,
wherein it includes a device as set out according to claims 5.
